# EUROPÄISCHE PATENTSCHRIFT

(11) **EP 1 563 167 B1**
(45) Veröffentlichungstag und Bekanntmachung des Hinweises auf die Patenterteilung: **09.07.2008**
(21) Anmeldenummer: 03767398.5
(22) Anmeldetag: 30.10.2003
(51) Int. Cl.: F01D 7/00

(54) **SELBSTREGELNDE TURBINE**
SELF-REGULATING TURBINE
TURBINE AUTOREGULEE

(30) Priorität: 05.11.2002 DE 10251752
(43) Veröffentlichungstag der Anmeldung: 17.08.2005
(73) Patentinhaber: Deutsche Energie Holding GmbH, 44227 Dortmund (DE)
(72) Erfinder: Priebe, Klaus-Peter, 44357 Dortmund (DE)
(74) Vertreter: Meinke, Dabringhaus und Partner GbR
(86) Internationale Anmeldenummer: PCT/DE2003/003607
(87) Internationale Veröffentlichungsnummer: WO 2004/042198

(56) Entgegenhaltungen:
- WO-A-02/052127
- DE-A- 1 428 192
- DE-C- 448 685
- DE-C- 819 094
- DE-C- 866 145
- FR-A- 2 285 514
- GB-A- 602 706
- GB-A- 905 663
- US-A- 2 816 731
- US-A1- 2003 099 539
- US-B1- 6 202 400
- US-B1- 6 406 256
- BECKER M ET AL: "KONZENTRIERENDE SOLARSYSTEME UND SOLARE CHEMIE" BWK BRENNSTOFF WARME KRAFT, VDI VERLAG GMBH. DUSSELDORF, DE, Bd. 52, Nr. 4, 2000, Seiten 72-76, XP000927276 ISSN: 0006-9612

## Beschreibung

Die DE 42 00507 A1 offenbart eine Turbine mit sehr vielen geometrischen Einstellmöglichkeiten. Durch die Laufradverstellung 3a wird der Durchlassspalt oder -größe und gleichzeitig die Turbinenschaufellänge 2 oder -blattlänge und die Spirale 14 über die Blattfeder 9 nicht selbständig verändert.

Selbständige geometrische Veränderungen offenbaren die Schriften US 3 149 820 und US 4 540 337.

Diese Schriften stellen nur die Auswahl von vielen bekannten technischen Lösungen dar.

Die US 2 442 783 beschreibt eine selbstregelnde Turbine gemäß dem Oberbegriff des Anspruchs 1, bei der der Rotor Turbinenschaufeln mit flexiblen Metallblättern aufweist, die sich abhängig von der Rotordrehzahl in ihrer Form ändern können, wodurch sich eine automatische Geschwindigkeitsregelung der Turbine ergibt.

Der Erfindung liegt die Aufgabe zu Grunde, speziell für eine Turbine die variable Tages- und Jahresgangbelastung und einem möglichen Pulsbetrieb die Turbinengeometrie zu einem optimalen Wirkungsgrad anzupassen.

Die gestellte Aufgabe war es also z.B. für einen Massenstrom von 0,5 bis 20,0 1/s zwischen 0,2 Mpa auf der Eingangsseite und 0,1 Mpa auf der Austrittseite eine sich selbst anpassende Turbine mit nahezu gleichbleibender Drehzahl bei variablem Drehmoment zu erfinden, wobei im Winkel verstellbare Leit- und /oder Laufschaufeln angesichts der geforderten Robustheit und kleinen Baugröße außer Betracht bleiben mussten.

An bekannten Lösungskonzepten sind insbesondere die Verwendung von variablen Leitschaufeln zwecks Veränderung des Anströmwinkels und der Anströmgeschwindigkeit seit langem erprobt.

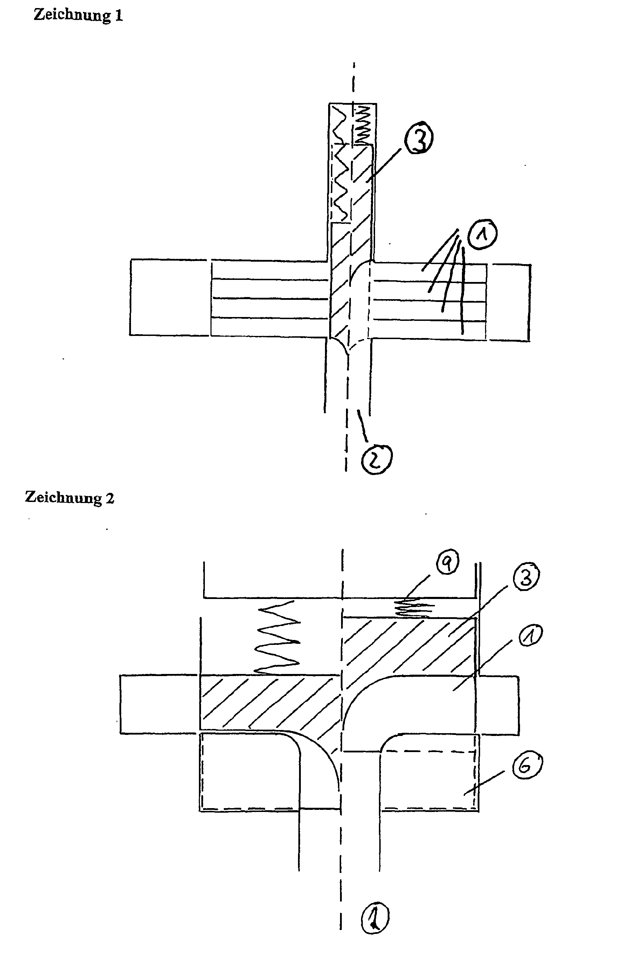

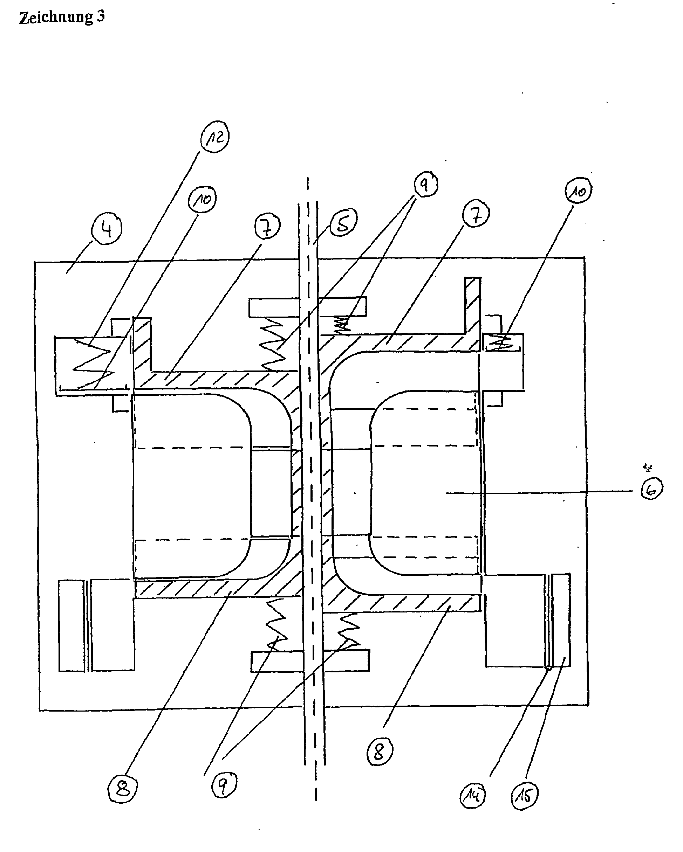

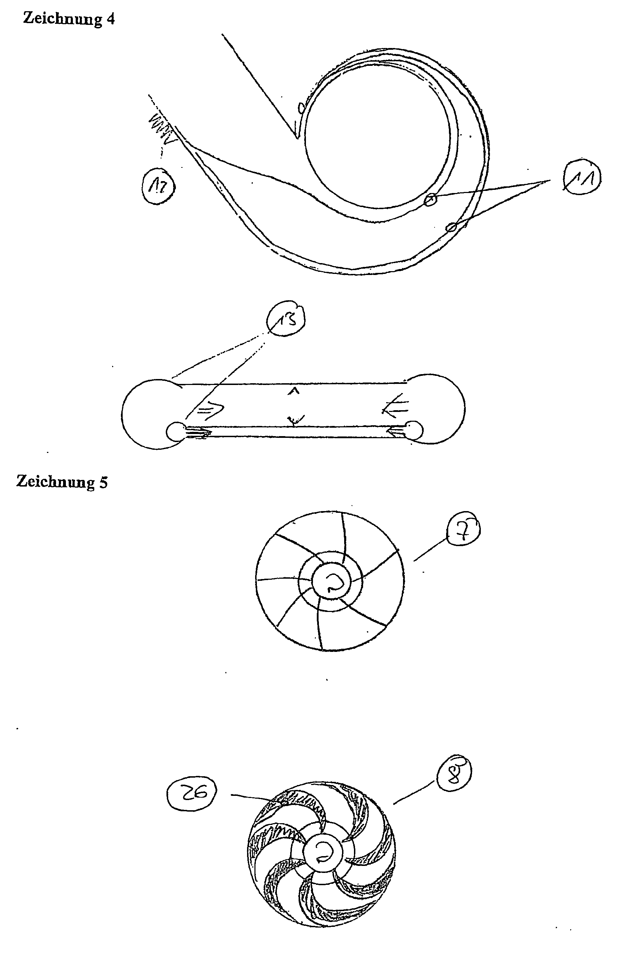

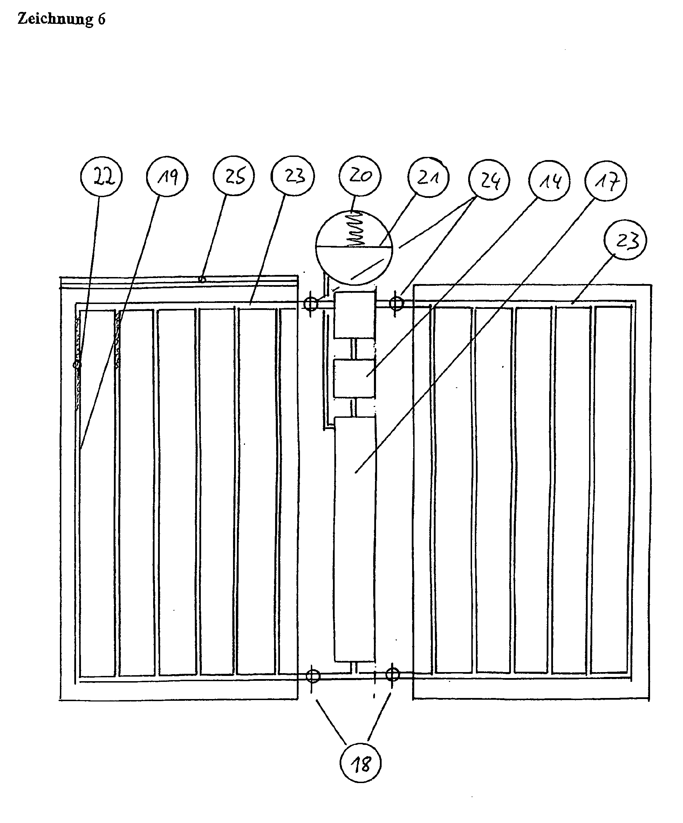

Die bekannten Ausführungsformen von Turbinen zeigen jedoch bei der gestellten Aufgabe hinsichtlich des optimalen Wirkungsgrades den negativen Effekt, dass bei der gestellten Aufgabe aufgrund der im wesentlichen starren Geometrie des Turbinenläufers, besser der Turbinenschaufeln, nur zweimal täglich bei Verwendung eines vorgeschalteten Solarabsorbers als Dampf- oder Heißgaserzeuger das Wirkungsgradoptimum erreicht wird und die Turbine in der verbleibenden Zeit entweder deutlich im Unterlastbereich oder im Überlastbereich unwirtschaftlich arbeitet (s.a. Abbildung 1).

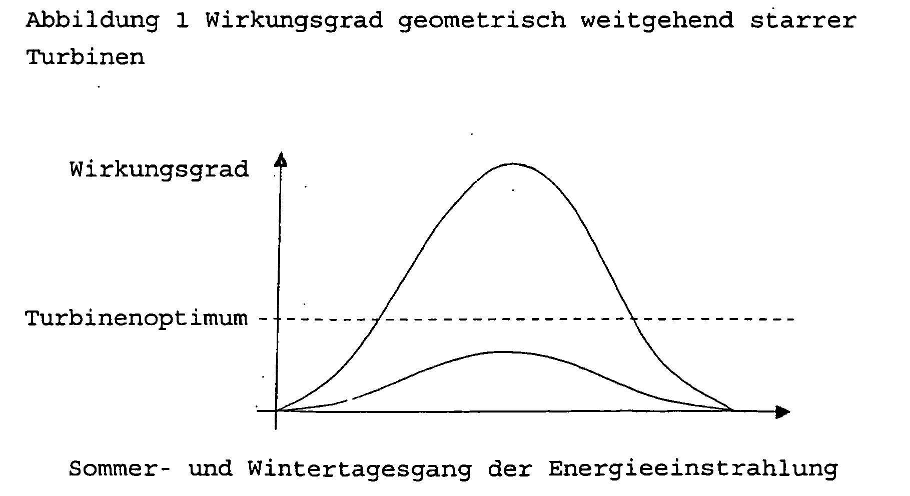

Zudem ist bei Verwendung einer Turbine nach einem Solarabsorber zu beachten, dass die Turbinengeometrie für einen mittleren optimalen Arbeitsbereich ausgelegt wird, der den Tages- und Jahresgang optimal nutzen sollte. Damit wird bei herkömmlicher Turbinengeometrie der optimale Arbeitspunkt relativ niedrig angesetzt werden. Im Ergebnis wird eine herkömmliche Turbine zu mindestens 90% der nutzbaren Zeit in deutlicher Entfernung von optimalen Betriebszuständen im Unterlast- oder Überlastbereich arbeiten, d.h. nur einen mittleren Wirkungsgrad von vielleicht 25% gegenüber erreichbaren 70% erzielen.

Erkennbar können zur Anpassung der Turbine an wechselnde Betriebszustände mit großen Varianzen weitere Maßnahmen neben der möglichen Verwendung verstellbarer Leitschaufeln getroffen werden. Diese Maßnahmen betreffen insbesondere
- die Anpassung des Anströmkanales der Turbine sowie
- eine veränderliche Turbinenschaufellänge bei Radialturbinen sowie
- die elektronische Steuerung des im Generator erzeugten Stromes zwecks Drehzahlbegrenzung nach Erreichen der Nenndrehzahl und der Nennspannung sowie
- einen Seebeck-Wärme-Strom-Tauscher im Turbinenauslasskanal.

Die oben genannte Aufgabe wird erfindungsgemäß dadurch gelöst, dass als eine Regelgröße zur Drehzahlbegrenzung der Turbine die Veränderung des Stromflusses in dem der Turbine nachgeschalteten Generator eingesetzt wird und bei radialer Anströmung der Turbine in einem ersten Abschnitt des Kanals zwischen den Turbinenblättern die von außen nach innen laufenden Turbinenschaufelabschnitte in einer axial als Impeller mitrotierenden Negativform versenkbar ausgestaltet sind und über einen strömungsgünstig ausgeformten zentralen Strömungskanal des Impellers in einen letzten Abschnitt übergehen, in dem die von innen nach außen laufenden Turbinenblätter wiederum versenkbar in der Negativform ausgestaltet sind.

Weitere Ausgestaltungen der Erfindung ergeben sich aus den Unteransprüchen. Dabei kann insbesondere vorgesehen sein, dass die beiden, die Turbinenschaufeln tragenden Rotationskörper mit der die Turbinenschaufeln aufnehmenden Negativform in Form eines Impellers eine Baugruppe bilden, die durch jeweils eine oder mehrere Federn derart vorgespannt werden, dass bei zunehmenden Gas- oder Dampfströmen die Turbinenschaufeln teilweise oder ganz frei gegeben sind.

Vorteilhaft kann es darüber hinaus auch sein, dass die einen oder mehrere Statoren und Rotoren eines Turbinensatzes in einer Ebene angeordnet sind und je nach Gas- oder Dampfmenge der in der Rotationsebene zur Verfügung stehende freie Spalt selbsttätig durch eine temperatur- und druckgesteuerte Federkraft geregelt wird.

Mit diesen erfindungsgemäßen Maßnahmen lässt sich eine Anpassung an variable Gas- und Dampfmengen erreichen und die Turbine unterschiedlichen Lastzuständen angepasst werden.

Eine weitere Ausgestaltung der Erfindung besteht darin, dass die äußere Wandung des Turbinenauslasskanals Seebeckelemente aufweist, deren Außenseite durch einen Kanal gebildet wird, der von dem Arbeitsmedium des Sekundärkreislaufes vor Eintritt in den Wärmetauscher durchströmt wird.

Eine weitere besonders zweckmäßige Ausgestaltung der Erfindung besteht darin, dass entweder eine rotierende Turbinengrundplatte auf der den Turbinenschaufeln abgewandten Seite oder der rotierende Impeller auf der Außenseite Permanentmagnete abwechselnder Polarität aufweisen und gegenüber dem Rotationsspalt die Erregerwicklungen des Generators angebracht sind.

Schließlich kann in weiterer vorteilhafter Ausgestaltung nach der Erfindung vorgesehen sein, dass die Absorber am oberen Gehäuserand mit Seebeckelementen abgeschlossen sind, die auf der Außenseite unmittelbar beschattet zwangsweise durch Luft gekühlt werden.

Die oben genannten Maßnahmen führen dazu, dass die sich selbst an unterschiedliche Lastzustände anpassende Turbine auch bei kleinen Dampf- oder Gasmassenströmen schnell ihre Nenndrehzahl erreicht und der mit der Turbine verbundene Generator ebenfalls schnell seine Nennspannung erreicht. Eine Drehzahlbegrenzung der Turbine wird erreicht, in dem durch eine geeignete, spannungsgesteuerte Steuerung der Stromfluss durch den Generator gesteuert wird und der zunehmende Stromfluss dem Moment der Turbine ein geeignet hohes elektromagnetisches Moment entgegensetzt.

Die äußere Wandung des Turbinenauslasskanales erlaubt den wärmedurchgang durch Peltierelemente zu einem Kühlkanal, der von dem Arbeitsmedium des Sekundärkreislaufes vor Eintritt in den Wärmetauscher durchströmt wird. Damit wird eine weitere Stromgewinnung in der bevorzugten Temperaturdifferenz von 150 °C zu 30 °C ermöglicht.

Die sich selbst anpassende Turbine soll vorzugsweise zur Stromgewinnung mit Solarabsorbern eingesetzt werden, ist aber gleichermaßen auch für andere Betriebszwecke mit wechselnden Lasten einsetzbar. Bei geeigneter Werkstoffwahl ist auch der Betrieb mit Heißgas aus Verbrennungsprozessen vorstellbar.

Bei dem Einsatz mit Solarabsorbern werden für eine optimale Betriebsführung des Solarabsorbers in Abhängigkeit von der Solareinstrahlung weitere notwendige, die Erfindung vervollständigende Vorrichtungen vorgesehen. So ist beabsichtigt, den Solarabsorber am oberen Gehäuseabschluß mit einem Peltier-Wärme-Stromtauscherelement auszustatten, dessen warme Seite das Solarabsorbergehäuse innen abschließt und dessen äußere Seite beschattet und zwangsweise thermisch belüftet und damit gekühlt wird.

So ist weiter nach dem Turbinen- und Generatorsatz ein Wärmetauscher vorgesehen, der das jeweils gewählte Arbeitsmedium wieder auf die Absorbereintrittstemperatur abkühlt und die gewonnene Wärmetauscherenergie z.B. einem Wärmekreislauf oder einem Wärmespeicher zur Verfügung stellt.

Hierbei kann das Arbeitsmedium ein Gas oder ein Fluid sein, das im Absorber verdampft und in dem der Turbine nachgeordneten Wärmetauscher wieder kondensiert.
Die gewünschte Arbeitsrichtung des Arbeitsmediums wird sichergestellt durch ein Rückschlagventil am unteren Eintritt des Arbeitsmediums in den Solarabsorber, das nur die von unten erfolgende Zuströmung in den Absorber zuläßt.

Die in oder auf der Absorberfläche aufliegenden Absorberrohre können zur Herbeiführung eines besseren Wärmeüberganges von der Absorberfläche durch die Absorberrohrwandfläche auf das zu erwärmende Arbeitsmedium mit einem gut gas- oder dampfdurchlässigen und gut wärmeübertragenden Füllmaterial wie z.B. Kupferwolle gefüllt sein. Das Absorberrohr kann auch ein stranggepresstes Hohlprofil mit sternförmigen Einzelsektionen sein, um eine möglichst große Wärmeübertragungsfläche zur Verfügung stellen zu können.

Es erweist sich bei Verwendung eines zu verdampfenden Arbeitsmediums weiter als vorteilhaft, den Vorrichtungsinnendruck in den Absorberrohren variabel zu gestalten um in Abhängigkeit von der gemäß Sonneneinstrahlung erreichbaren Prozeßtemperatur eine optimale Dampfmenge erzeugen zu können. So würde Wasser bei Normaldruck erst bei 100 °C verdampfen, bekannte Kältemittel dagegen schon bei etwa 50 °C. Der Innendruck im Primärkreislauf soll so mit der Vorlauftemperatur des Sekundärkreislaufes abgestimmt sein, daß das Arbeitsmedium im Primärkreislauf einem Druck ausgesetzt wird, dessen zugehörige Siedetemperatur mehr als 5 °C über der Vorlauftemperatur des Sekundärkreislaufes liegt.

Dies wird durch eine selbsttätige Vorrichtung erreicht, bei der das Innere der Absorberrohre mit einem Druckregelkörper verbunden ist, der über eine gas-und dampfundurchlässige Membran mit dem Arbeitsmedium des Sekundärkreislaufes verbunden ist. Bei niedrigen Vorlauftemperaturen wird die Membran über eine Bimetallfeder gespannt und damit der Druck im Inneren der Verdampfungsvorrichtung abgesenkt.

Es erweist sich als besonders vorteilhaft bei wirkungsgradkritischen, niedrigen Arbeitstemperaturen und niedrigen Gas- oder Dampfmengen pro Zeiteinheit, das System im Pulsbetrieb zu fahren, in dem die Absorberrohre in einem gemeinsamen Absorberrohr zusammengeführt werden und dieses gemeinsame Absorberrohr erst mit einem federgesteuerten Rückschlagventil bei einem voreingestellten Druck öffnet und die durch den Energieeintrag erzeugte Gas-oder Dampfmenge impulsartig die Turbine beaufschlagt. Dieser Impulsbetrieb kann geglättet werden, in dem zwei oder mehr gemeinsame Absorberrohre abwechselnd zur Beaufschlagung der Turbine freigegeben werden.

Die Erfindung und entsprechendes technisches Umfeld wird in sechs Zeichnungen dargestellt:
- Zeichnung 1: Turbine mit axialer Anströmung und radialer Ausströmung
- Zeichnung 2: Turbine mit versenkbaren Turbinenschaufeln
- Zeichnung 3: Turbine mit radialer An- und Ausströmung
- Zeichnung 4: Ausbildung der radialen Anströmkanäle
- Zeichnung 5: Beschaufelung der Einlass-, Mittel- und Auslassturbinenteile
- Zeichnung 6: Systemdarstellung gekoppelter Solarabsorber mit erfindungsgemäßer Turbine

### Bezugszeichenliste:

- 1.: Turbinensatz
- 2.: Gas- bzw. Dampfeintrittsbohrung
- 3.: Steuerzylinder
- 4.: Turbinenstator
- 5.: Turbinenrotor
- 6.: Impeller mit Turbinenschaufelaufnahmen
- 7.: Rotationskörper Turbineneinlass mit Turbinenschaufeln
- 8.: Rotationskörper Turbinenauslass mit Turbinenschaufeln
- 9.: Feder/-n zum Vorspannen der Rotationskörper gegen Impeller
- 10.: veränderliches Höhenprofil Einlasskanal
- 11.: veränderliches Tiefenprofil Einlasskanal
- 12.: Spannfedern Höhen- bzw. Tiefenprofil
- 13.: Drucksensitive, elastische Wandung Einlasskanal
- 14.: Peltier-Wärme-Strom-Tauscher am Turbinenauslasskanal
- 15.: Kühlungskanal des Seebecktauschers
- 16.: Wärmetauscher zum Sekundärkreislauf
- 17.: Fallrohr zum Absorbereintritt
- 18.: Rückschlagventil
- 19.: Absorberrohre
- 20.: Druckregelbehälter
- 21.: bimetallgesteuerte Membran
- 22.: gas- bzw. dampfdurchlässiger Füllkörper
- 23.: gemeinsame Absorberrohre
- 24.: Gekoppelte Rückschlagventile für Pulsbetrieb
- 25.: Seebeck-Wärme-Strom-Tauscherelement am Absorber
- 26.: Temperatur- und druckelastisches Federblatt

## Patentansprüche

1. Turbine zur Beaufschlagung mit unterschiedlichen Gas- oder Dampfmengen bei unterschiedlichen Temperaturen und Drücken, wobei in Abhängigkeit von der zur Verfügung stehenden erhitzten Gas- oder Dampfmenge nach Erreichen der Nenndrehzahl die Durchlassspaltgröße zwischen den Turbinenschaufeln oder die Turbinenblattneigung selbständig druck- und/oder temperaturabhängig eingestellt wird,
**dadurch gekennzeichnet,**
**dass** als eine Regelgröße zur Drehzahlbegrenzung der Turbine die Veränderung des Stromflusses in dem der Turbine nachgeschalteten Generator eingesetzt wird und bei radialer Anströmung der Turbine in einem ersten Abschnitt des Kanals zwischen den Turbinenblättern die von außen nach innen laufenden Turbinenschaufelabschnitte in einer axial als Impeller (6) mitrotierenden Negativform versenkbar ausgestaltet sind und über einen strömungsgünstig ausgeformten zentralen Strömungskanal des Impellers in einen letzten Abschnitt übergehen, in dem die von innen nach außen laufenden Turbinenblätter wiederum versenkbar in der Negativform ausgestaltet sind.

2. Turbine nach Anspruch 1,
**dadurch gekennzeichnet, dass**
die Turbine zwei Turbinenschaufeln tragenden Rotationskörper (7, 8) umfasst, und
**dass** die beiden, Rotationskörper (7,8) mit der die Turbinenschaufeln aufnehmenden Negativform in Form eines Impellers eine Baugruppe bilden, die durch jeweils eine oder mehrere Federn (9) derart vorgespannt werden, dass bei zunehmenden Gas- oder Dampfströmen die Turbinenschaufeln teilweise oder ganz frei gegeben sind.

3. Turbine nach Anspruch 1,
**dadurch gekennzeichnet,**
**dass** die einen oder mehrere Statoren (4) und Rotoren (5) eines Turbinensatzes in einer Ebene angeordnet sind und je nach Gas- oder Dampfmenge der in der Rotationsebene zur Verfügung stehende freie Spalt selbsttätig durch eine temperatur- und druckgesteuerte Federkraft geregelt wird.

4. Turbine nach einem der Ansprüche 1 bis 3,
**dadurch gekennzeichnet,**
**dass** die äußere Wandung des Turbinenauslasskanals Seebeckelemente (25) aufweist, deren Außenseite durch einen Kanal (15) gebildet wird, der von dem Arbeitsmedium des Sekundärkreislaufes vor Eintritt in den Wärmetauscher (16) durchströmt wird.

5. Turbine nach einem der Ansprüche 1 bis 4,
**dadurch gekennzeichnet,**
**dass** entweder eine rotierende Turbinengrundplatte auf der den Turbinenschaufeln abgewandten Seite oder der rotierende Impeller (6) auf der Außenseite Permanentmagnete abwechselnder Polarität aufweisen und gegenüber dem Rotationsspalt die Erregerwicklungen des Generators angebracht sind.

6. Turbine nach einem der Ansprüche 1 bis 5,
**dadurch gekennzeichnet,**
**dass** die Absorber (23) am oberen Gehäuserand mit Seebeckelementen (25) abgeschlossen sind, die auf der Außenseite unmittelbar beschattet zwangsweise durch Luft gekühlt werden.

## Claims

1. Turbine acted up by different quantities of gas or steam at different temperatures and pressures, the size of the exit gap between the turbine blades or the turbine blade angle being pressure or temperature controlled by self regulation in a manner dependent on the quantity of heated gas or steam available after nominal rotational speed is attained,
**characterised in that**
the change in current flow in the generator connected downstream from the turbine is used as a control variable to restrict the rotational speed of the turbine and, where radial inflow occurs into the turbine in a first section of the channel between the turbine blades, the turbine blade sections running from the outside inwards are arranged to retract in a negative shape co-rotating axially as an impeller (6) and blend, via a central flow channel of the impeller shaped to provide an appropriate flow, into a last section in which the turbine blades running from the inside outwards are again arranged to to retract in the negative shape.

2. Turbine in accordance with claim 1,
**characterised in that**
the turbine comprises two rotating bodies (7, 8) holding turbine blades and that the two rotating bodies (7, 8) form a module with the negative shape, accommodating the turbine blades, in the form of an impeller, and are each acted on by one or more springs (9) such that, as the flow of gas or steam increases, the turbine blades are released partially or totally.

3. Turbine in accordance with claim 1,
**characterised in that**
one or more stators (4) and rotors (5) of a turbine set are arranged in one plane and, depending on the quantity of gas or steam, the open gap existing in the plane of rotation is controlled by self regulation by a temperature and pressure controlled spring force.

4. Turbine in accordance with one of claims 1 to 3,
**characterised in that**
the external wall of the turbine exit channel comprises Seebeck elements (25), whose outer side is formed by a channel (15) through which the secondary circuit working medium flows before entering the heat exchanger (16).

5. Turbine in accordance with one of claims 1 to 4,
**characterised in that**
either a rotating turbine base plate on the side opposite the turbine blades or the rotating impeller (6) on the outer side have permanent magnets with alternating polarity and the exciter windings of the generator are disposed opposite the rotation gap.

6. Turbine in accordance with one of claims 1 to 5,
**characterised in that**
the absorber (23) on the upper rim of the housing is capped with Seebeck elements (25) which are forcibly cooled directly enveloped by air on the outer side.

## Revendications

1. Turbine pour le fonctionnement avec différentes quantités de gaz ou de vapeur à différentes températures et pressions, dans laquelle, en fonction de la quantité de gaz ou de vapeur chauffée disponible après l'obtention du nombre de tours nominal, la grandeur de l'espace de passage entre les pales de la turbine ou l'inclinaison des pales de la turbine est réglée automatiquement, en fonction de la pression et/ou de la température,
**caractérisée en ce que**
en tant que variable de régulation pour la limitation du nombre de tours de la turbine, la variation du débit est réglée dans le générateur situé en aval de la turbine et pour l'écoulement radial dans la turbine, dans une première section du canal située entre les pales de la turbine, les sections de pales de turbine se déplaçant de l'extérieur vers l'intérieur sont conçues de façon abaissable dans une forme négative en co-rotation axialement en tant que pales (6) et, par l'intermédiaire d'un canal d'écoulement d'hélice centrale formé de façon favorable à l'écoulement, aboutissent dans une dernière section dans laquelle les pales de turbine fonctionnant de l'intérieur vers l'extérieur sont conçues de façon à être à nouveau abaissables dans la forme négative.

2. Turbine selon la revendication 1,
**caractérisée en ce que** la turbine comprend deux corps de rotation (7, 8) porteurs de pales de turbine, et
**en ce que** les deux corps de rotation (7, 8) constituent, avec la forme négative prise par les pales de turbine sous forme d'une hélice, un ensemble qui est précontraint respectivement par un ou plusieurs ressorts (9), de telle sorte que dans le cas d'un écoulement croissant de gaz ou de vapeur, les pales de la turbine sont partiellement ou totalement libérées.

3. Turbine selon la revendication 1,
**caractérisée en ce que**
un ou plusieurs stators (4) et rotors (5) d'un bloc de turbine sont agencés dans un plan et, selon la quantité de gaz ou de vapeur libérée dans l'espace libre disponible dans le plan de rotation, sont automatiquement régulés par une force de ressort commandée par la température et par la pression.

4. Turbine selon l'une des revendications 1 à 3,
**caractérisée en ce que**
la paroi extérieure du canal de sortie de turbine présente des éléments à effet Seebeck (25) dont le côté extérieur est formé par un canal (15) qui est traversé par le fluide de travail du circuit secondaire avant l'entrée dans l'échangeur de chaleur (16).

5. Turbine selon l'une des revendications 1 à 4,
**caractérisée en ce que**
soit une embase de turbine en rotation sur le côté détourné de la pale de turbine, soit l'hélice (6) en rotation sur le côté extérieur comporte des aimants permanents à polarité alternée et, en face de l'espace de rotation, sont agencés des enroulements d'excitation du générateur.

6. Turbine selon l'une des revendications 1 à 5,
**caractérisée en ce que**
les absorbeurs (23) sur le côté de logement supérieur sont obturés par des éléments à effet Seebeck (25) qui, sur le côté extérieur directement à l'ombre, sont obligatoirement refroidis par air.
